# EUROPÄISCHE PATENTSCHRIFT

(11) **EP 4 269 837 B1**
(45) Veröffentlichungstag und Bekanntmachung des Hinweises auf die Patenterteilung: **30.04.2025**
(21) Anmeldenummer: 22170122.0
(22) Anmeldetag: 26.04.2022
(51) Int. Cl.: F16H 57/027, F16L 5/10, F16L 37/088, F16H 57/02, H02K 7/116, F16H 63/34

(54) **KUPPLUNGSANORDNUNG UND GETRIEBEEINRICHTUNG MIT EINER DERARTIGEN KUPPLUNGSANORDNUNG**
COUPLING ASSEMBLY AND TRANSMISSION DEVICE COMPRISING SUCH A COUPLING ASSEMBLY
AGENCEMENT D'ACCOUPLEMENT ET DISPOSITIF DE TRANSMISSION DOTÉ D'UN TEL AGENCEMENT D'ACCOUPLEMENT

(43) Veröffentlichungstag der Anmeldung: 01.11.2023
(73) Patentinhaber: Valeo eAutomotive Germany GmbH, 91056 Erlangen (DE)
(72) Erfinder: Haas, Bernd, 91056 C/o VSeA, Erlangen (DE); Fürstenhöfer, Christian, 91056 C/o VSeA, Erlangen (DE); Rucin´ska, Joanna, 91056 C/o VSeA, Erlangen (DE)
(74) Vertreter: Valeo Powertrain Systems

(56) Entgegenhaltungen:
- WO-A1-92/09840
- DE-A1- 102019 132 496
- US-A1- 2003 057 699
- US-A1- 2010 052 315

## Beschreibung

Die Erfindung betrifft eine Kupplungsanordnung, umfassend ein Durchführungselement, das zum Bilden einer Fluidverbindung zwischen dem Äußeren und dem Inneren eines Gehäuses in eine Öffnung des Gehäuses einsetzbar ist, sowie ein Fluidleitelement mit einer becherförmigen Ausnehmung, in die das Durchführungselement einsteckbar ist.

Eine derartige Kupplungsanordnung kann bei einer Getriebeeinrichtung für ein elektrisch antreibbares Fahrzeug eingesetzt werden. Die Getriebeeinrichtung kann ein Parksperrenrad, eine Parksperre mit einem Parksperrenaktuator zum Blockieren des Parksperrenrads, ein Getriebegehäuse, in dem das Parksperrenrad und die Parksperre aufgenommen sind, und eine Druckausgleichsvorrichtung, durch die das Innere des Parksperrenaktuators mit dem Äußeren des Getriebegehäuses fluidverbunden ist, aufweisen.

Durch die Integration einer Parksperre in ein Getriebegehäuse kann Bauraum eingespart werden, der insbesondere im Hinblick auf den Einsatz der Getriebeeinrichtung in einer elektrischen Antriebseinrichtung eines Fahrzeugs knapp ist. Allerdings ergeben sich daraus besondere Herausforderungen wegen des Vorhandenseins von Schmiermitteln und durch höhere Temperaturen im Inneren des Getriebegehäuses. Es ist wichtig, dass das im Getriebegehäuse vorhandene Getriebeöl nicht in den Parksperrenaktuator der Parksperre gelangt, zum Beispiel durch Druckunterschiede zwischen dem Inneren des Parksperrenaktuators und dem Äußeren des Getriebegehäuses.

Die DE 10 2018 133 266 A1 beschreibt eine Getriebeeinrichtung mit einer Druckausgleichsvorrichtung.

An eine Kupplungsanordnung, die Bestandteil einer Druckausgleichsvorrichtung ist, werden hohe Anforderungen hinsichtlich der Dichtheit gestellt. Die Kupplungsanordnung muss einfach montierbar sein und eine zuverlässige Abdichtung sicherstellen. Das Fluidleitelement weist eine Ausnehmung auf, in die das Durchführungselement einsetzbar oder einsteckbar ist. Das Durchführungselement muss beim Einsetzen in das Fluidleitelement automatisch zentriert werden, um eine Kippbewegung zu vermeiden, die zu einer Undichtigkeit führen könnte.

US 2010/052315 A1 offenbart eine Kupplungsanordnung, die einen weiblichen Verbindungskörper und ein Steckerelement umfasst. Diese werden durch ein U-förmiges Halteelement lösbar miteinander verbunden. Axial hinter dem Halteelement sind korrespondierende Kerben und Rippen am Verbindungskörper bzw. Steckerelement vorgesehen, um eine relative Rotation zu verhindern.

Der Erfindung liegt daher die Aufgabe zugrunde, eine Kupplungsanordnung anzugeben, die einfach montierbar ist und eine zuverlässige Abdichtung sicherstellt.

Diese Aufgabe wird durch eine Kupplungsanordnung nach Anspruch 1 gelöst.

Die Kupplungsanordnung umfasst somit das Durchführungselement, das in eine Öffnung eines Gehäuses, insbesondere eines Getriebegehäuses, eingesetzt wird. Das Durchführungselement umfasst die erste Reihe der in Umfangsrichtung verteilt angeordneten, radial abstehenden Vorsprünge, die sich im montierten Zustand in der Ausnehmung des Fluidleitelements befinden. Die erste Reihe der Vorsprünge verhindert ein "Verkippen" des Durchführungselements. Ohne diese erste Reihe der Vorsprünge könnte es ansonsten zu einem leichten Kippen des Durchführungselements kommen. Die erste Reihe der Vorsprünge richten das Durchführungselement aus, so dass es präzise zentral eingesetzt wird. Gleichzeitig wird dadurch eine sichere und störungsfreie Abdichtung gewährleistet. Die erste Reihe der Vorsprünge stellt eine zuverlässige Abdichtung sicher, sodass ein Eindringen von Fluid, insbesondere Schmiermittel, das sich in dem Getriebegehäuse befindet, in den Parksperrenaktuator verhindert wird.

Die Erfindung sieht vor, dass die becherförmige Ausnehmung des Fluidleitelements an ihrem Innenumfang verteilt angeordnete, radial nach innen weisende Zentrierrippen aufweist. Vorzugsweise sind drei derartige Zentrierrippen vorhanden. Die Zentrierrippen sind Vorsprünge, die den äußeren Endabschnitt des Durchführungselements in dem Fluidleitelement abstützen und zentrieren. Darüber hinaus weist das Fluidleitelement ein als O-Ring ausgebildetes Dichtelement auf, das eine Abdichtung zwischen dem Fluidleitelement und dem Durchführungselement sicherstellt. Aufgrund der Zentrierrippen kann das Durchführungselement nicht verkippen, sodass die Dichtwirkung permanent gewährleistet ist. Diese Zentrierrippen führen somit dazu, dass das Durchführungselement genau axial eingeführt wird und nicht kippen kann beziehungsweise nur leicht verkippt werden kann, jedoch ohne undicht zu werden. Die Zentrierrippen bewirken, dass das Durchführungselement und das Fluidleitelement permanent ihre Relativposition zueinander beibehalten.

Erfindungsgemäß umfasst die Kupplungsanordnung ein Befestigungselement zum Verbinden des Durchführungselements und des Fluidleitelements miteinander, wobei das Befestigungselement einen verformbaren Clip umfasst, der eine Öffnung der becherförmigen Ausnehmung durchsetzt und in eine Ausnehmung des Durchführungselements einsetzbar ist.

Der Erfindung sieht vor, dass die erste Reihe der Vorsprünge in Axialrichtung, entlang der das Durchführungselement in das Fluidleitelement einsetzbar ist, vor dem Befestigungselement angeordnet ist, und dass die an dem Innenumfang der becherförmigen Ausnehmung verteilt angeordneten, radial nach innen weisenden Zentrierrippen in der Axialrichtung, entlang der das Durchführungselement in das Fluidleitelement einsetzbar ist, hinter dem Befestigungselement angeordnet sind. Vorzugsweise können die Zentrierrippen an einem distalen Ende der becherförmigen Ausnehmung angeordnet sein.

Bei der erfindungsgemäßen Kupplungsanordnung wird es bevorzugt, dass die erste Reihe der Vorsprünge des Durchführungselements drei in Umfangsrichtung verteilt angeordnete Vorsprünge aufweist. Durch die drei Vorsprünge wird eine Verkippung des Durchführungselements verhindert und eine sichere Abdichtung des Durchführungselements gegenüber dem Fluidleitelement gewährleistet.

Vorzugsweise weist das Durchführungselement zwei weitere axial beabstandete Reihen von in Umfangsrichtung verteilt angeordneten, radial abstehenden Vorsprüngen zum Zentrieren des Durchführungselements in der Öffnung des Gehäuses auf.

Im Hinblick auf die zweite und die dritte Reihe der Vorsprünge kann es bei der erfindungsgemäßen Kupplungsanordnung vorgesehen sein, dass diese jeweils vier in Umfangsrichtung verteilt angeordnete Vorsprünge aufweisen. Wenn jeweils vier Vorsprünge vorhanden sind, ist eine sichere Zentrierung des Durchführungselements beim Einsetzen in das Fluidleitelement gewährleistet.

Es kann auch vorgesehen sein, dass die Vorsprünge der ersten und/oder zweiten und/oder dritten Reihe sich in Axialrichtung des Durchführungselements erstrecken und im Wesentlichen quaderförmig ausgebildet sind. Die quaderförmigen Vorsprünge führen und zentrieren das Durchführungselement beim Einsetzen in das Fluidleitelement bzw. das Getriebegehäuse.

Um die Herstellung der Fluidverbindung durch Einsetzen des Durchführungselements in das Fluidleitelement zu vereinfachen, kann es auch vorgesehen sein, dass die Vorsprünge der ersten und/oder zweiten und/oder dritten Reihe schräge, sich radial nach außen verjüngende Seitenflächen aufweisen.

Eine besonders zuverlässige Abdichtung der erfindungsgemäßen Kupplungsanordnung ergibt sich, wenn axial vor und hinter den beiden Reihen der Vorsprünge jeweils ein O-Ring angeordnet ist.

Bei der erfindungsgemäßen Kupplungsanordnung wird es bevorzugt, dass das Durchführungselement und das Fluidleitelement manuell zusammensteckbar und trennbar sind.

Eine Weiterbildung der Erfindung sieht vor, dass die Kupplungsanordnung eine mit dem Fluidleitelement verbundene Rohr- oder Schlauchleitung aufweist, an deren Ende vorzugsweise ein weiteres Fluidleitelement angeordnet ist. Durch die Integration mehrerer Fluidleitelement wird die Anzahl der benötigten Montagevorgänge verringert.

Die erfindungsgemäße Kupplungsanordnung kann eine mit dem Durchführungselement fluidverbundene Membran aufweisen, die vorzugsweise mit einer Schutzkappe versehen ist. Durch die Membran wird der Ausgleich von Druckunterschieden, die auf beiden Seiten der Membran vorliegen, ermöglicht.

Daneben betrifft die Erfindung eine Getriebeeinrichtung für ein elektrisch antreibbares Fahrzeug, umfassend ein Parksperrenrad, eine Parksperre mit einem Parksperrenaktuator zum Blockieren des Parksperrenrads, ein Getriebegehäuse, in dem das Parksperrenrad und die Parksperre aufgenommen sind, eine Druckausgleichsvorrichtung, durch die das Innere des Parksperrenaktuators mit dem Äußeren des Getriebegehäuses fluidverbunden ist, wobei die Druckausgleichsvorrichtung eine Kupplungsanordnung der beschriebenen Art aufweist, deren Durchführungselement das Getriebegehäuse durchsetzt und deren Fluidleitelement mit dem Inneren des Parksperrenaktuators verbunden ist.

Weitere Vorteile und Einzelheiten der Erfindung werden nachfolgend anhand von Ausführungsbeispielen unter Bezugnahme auf die Zeichnungen erläutert. Die Zeichnungen sind schematische Darstellungen und zeigen:
- Fig. 1: ein Ausführungsbeispiel einer erfindungsgemäßen Getriebeeinrichtung bei geöffnetem Getriebegehäuse,
- Fig. 2: eine perspektivische Ansicht des Parksperrenaktuators und der Druckausgleichsvorrichtung,
- Fig. 3: eine geschnittene Ansicht des Durchführungselements,
- Fig. 4: eine perspektivische Ansicht des Durchführungselements,
- Fig. 5: ein Ausführungsbeispiel einer Kupplungsanordnung mit einem Durchführungselement und einem Fluidleitelement in einer geschnittenen Ansicht,
- Fig. 6: eine Ansicht der Kupplungsanordnung von Fig. 5 entlang der Linie VI-VI von Fig. 5 geschnitten,
- Fig. 7: eine Ansicht der Kupplungsanordnung von Fig. 5 entlang der Linie VII-VII von Fig. 5 geschnitten, und
- Fig. 8: eine Prinzipskizze eines Ausführungsbeispiels eines erfindungsgemäßen Fahrzeugs mit einer erfindungsgemäßen Antriebseinrichtung.

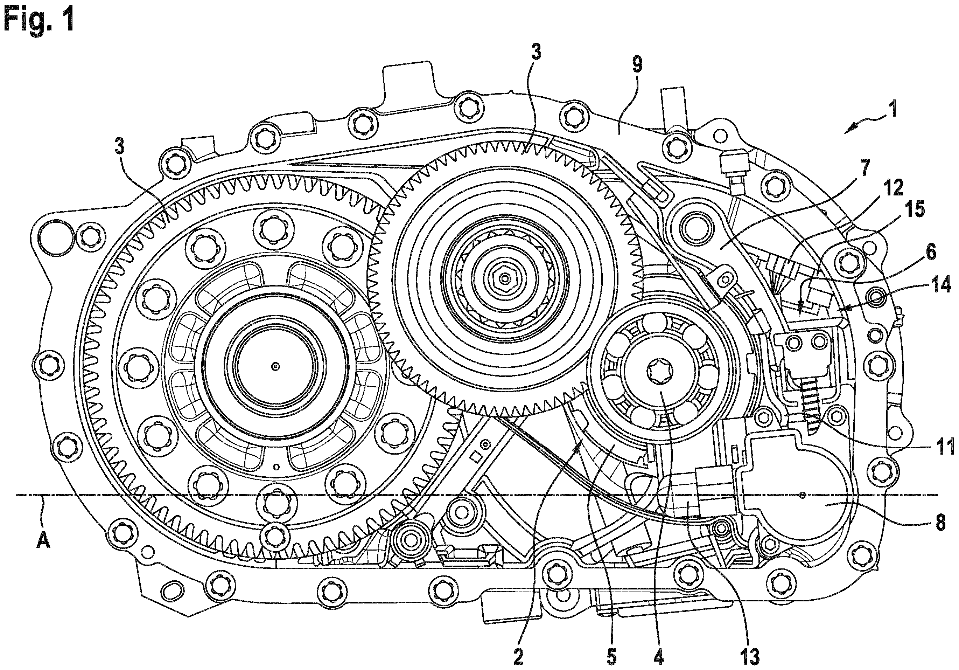

Fig. 1 zeigt ein Ausführungsbeispiel einer Getriebeeinrichtung bei geöffnetem Getriebegehäuse.

Die Getriebeeinrichtung 1 umfasst ein Getriebeelement 2, das mit weiteren Getriebeelementen 3 gekoppelt ist, um ein von einer drehfest mit dem Getriebeelement 2 verbundenen Welle, die von einem Lager 4 verdeckt ist, übertragenes Drehmoment zu übersetzen. An dem Getriebeelement 2 ist ferner ein Parksperrenrad 5 einer Parksperre 6 befestigt, durch welche das Getriebeelement 2 arretierbar ist. Dazu weist die Parksperre 6 ferner eine Parksperrenklinke 7 auf, die mittels eines Parksperrenaktuators 8 der Parksperre 6 in Eingriff mit dem Parksperrenrad 5 gebracht werden kann. Das Parksperrenrad 5 weist dazu an seinem Außenumfang entsprechende Ausnehmungen auf.

Die Getriebeelemente 2, 3 sowie die Parksperre 6 sind in einem Getriebegehäuse 9 aufgenommen. Zur Schmierung der Getriebeelemente 2, 3 weist die Getriebeeinrichtung 1 ein Schmiermittelbad auf, dessen betriebsüblicher Füllstand durch eine gestrichelte Linie A in Fig. 1 dargestellt ist. Ersichtlich befindet sich die Parksperre 6 teilweise im Schm ierm ittelbad.

Der Vollständigkeit halber zeigt Fig. 1 ferner eine Anschlussvorrichtung, die eine innerhalb des Getriebegehäuses 9 verlaufende Kabelanordnung 11, einen ersten Steckverbinder 12 und einen zweiten Steckverbinder 13 umfasst. Die Steckverbinder 12, 13 sind an gegenüberliegenden Enden der Kabelanordnung 11 angebracht, wobei der zweite Steckverbinder 13 mit dem Parksperrenaktuator 8 verbunden ist. Mittels der Anschlussvorrichtung ist der Parksperrenaktuator 8 von außen elektrisch versorgbar und ansteuerbar.

Die Getriebeeinrichtung 1 umfasst eine - in Fig. 1 größtenteils durch die Parksperre 6 und die Anschlussvorrichtung verdeckte - Druckausgleichsvorrichtung 14, durch welche das Innere des Parksperrenaktuators 8 mit dem Äußeren des Getriebegehäuses 9 gasdurchlässig verbunden ist. Die Druckausgleichsvorrichtung 14 ist durch eine Getriebegehäuseöffnung 15 hindurchgeführt. Diese Getriebegehäuseöffnung 15 und eine weitere Getriebegehäuseöffnung zur Durchführung des ersten Steckverbinders 12 sind separat ausgebildet.

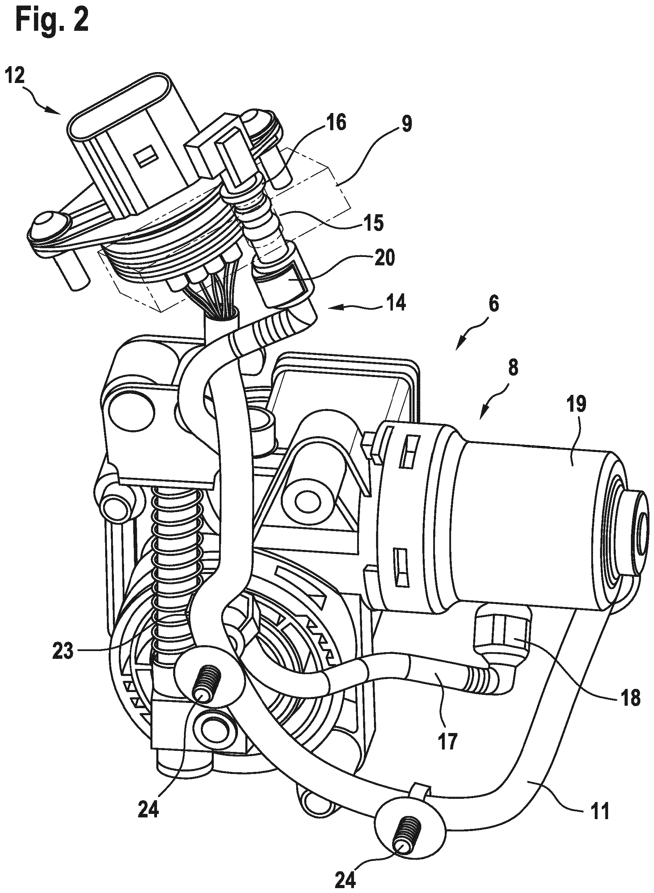

Fig. 2 ist eine perspektivische Ansicht des Parksperrenaktuators 8 und der Druckausgleichsvorrichtung 14. Ferner sind die Anschlussvorrichtung und gestrichelt ein Ausschnitt des Getriebegehäuse 9 mit der Getriebegehäuseöffnung 15 für die Druckausgleichsvorrichtung 14 dargestellt.

Die Druckausgleichsvorrichtung 14 umfasst ein Durchführungselement 16, das die Getriebegehäuseöffnung 15 durchsetzt, und ein rohrförmiges Fluidleitelement 17, dessen erstes (unteres) Ende mit dem Inneren des Parksperrenaktuators 8 verbunden ist und dessen zweites (oberes) Ende mit dem Durchführungselement 16 verbunden ist.

Am ersten, unteren Ende des Fluidleitelements 17 weist die Druckausgleichsvorrichtung 14 eine erste Kupplung 18 auf, die rastend mit einer - in Fig. 2 verdeckten - gegengleichen Kupplung, die an einem Parksperrenaktuatorgehäuse 19 ausgebildet ist, verbunden ist. Am zweiten, oberen Ende des Fluidleitelements 17 weist die Druckausgleichsvorrichtung 14 eine zweite Kupplung 20 auf, die mit dem Durchführungselement 16 verbunden ist.

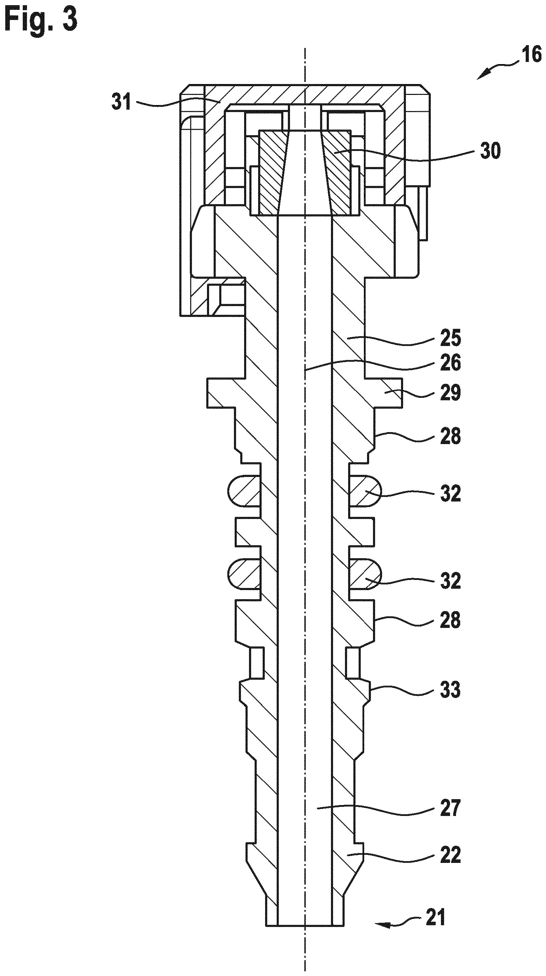

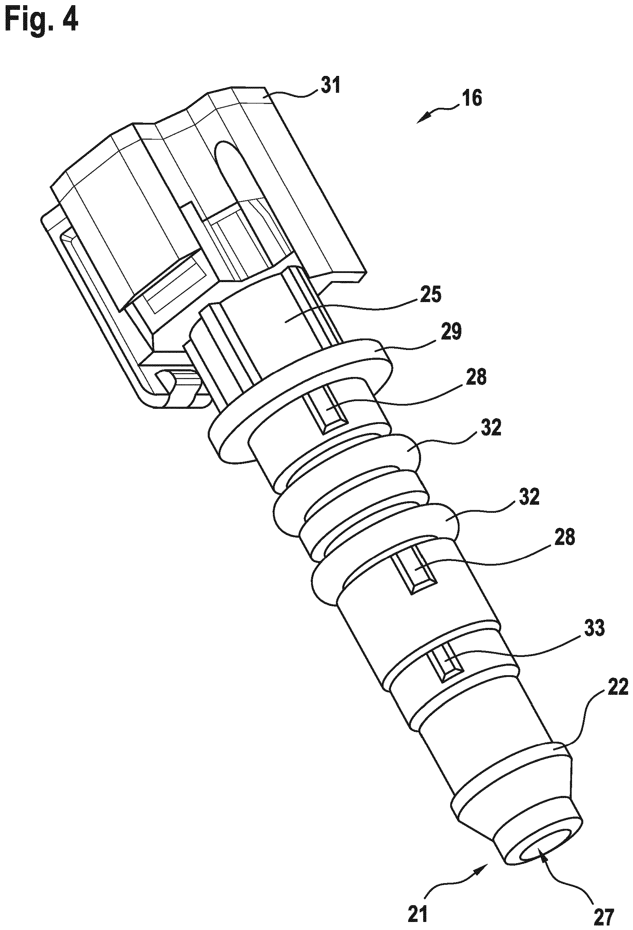

Die Kupplungen 18, 20 der Druckausgleichsvorrichtung 14 sind jeweils als Becherkupplung ausgebildet, wobei das Durchführungselement 16 und die Kupplung am Parksperrenaktuatorgehäuse 19 jeweils einen Rastkragen 22 (siehe Fig. 3 und Fig. 4) aufweisen.

Das Fluidleitelement 17 ist als formstabiles Rohr ausgebildet, das sich um die Anschlussvorrichtung herum windet und mittels eines am Fluidleitelement 17 angeordneten Befestigungsmittels 23 an der Kabelanordnung 11 befestigt ist. Zu sehen sind ferner an der Kabelanordnung 11 angebrachte Befestigungsmittel 24 der Anschlussvorrichtung, mit denen die Anschlussvorrichtung innerhalb des Getriebegehäuses 9 befestigt ist.

Fig. 3 und Fig. 4 zeigen jeweils das Durchführungselement 16, wobei Fig. 3 eine geschnittene Ansicht und Fig. 4 eine perspektivische Ansicht ist.

Das Durchführungselement 16 weist einen länglichen Körper 25 auf. Entlang einer Längsachse 26 des Körpers 25 erstreckt sich ein innerer zylindrischer Freiraum 27, der sich zu einem äußeren Ende des Körpers 25 hin konisch verjüngt. Der zylindrische Freiraum 27 bildet eine Durchführungsöffnung. An dem in Fig. 3 und Fig. 4 unteren freien Ende des Körpers 25 ist außen der konische Rastkragen 22 angeordnet. Ein radial nach außen weisender Kragen 29 des Körpers 25 liegt von außen auf dem Getriebegehäuse 9 auf und bildet einen Anschlag beim Einsetzen des Durchführungselements 16 in die Getriebegehäuseöffnung 15.

Das Durchführungselement 16 weist in der Nähe seines (unteren) Endes eine erste Reihe von Vorsprüngen 33 auf. Die erste Reihe umfasst drei Vorsprünge 33, die äquidistant über den Umfang verteilt angeordnet sind.

Zusätzlich umfasst das Durchführungselement 16 zwei axial beabstandete Reihen von in Umfangsrichtung verteilt angeordneten abstehenden Vorsprüngen 28. Die beiden Reihen der Vorsprünge 28 werden als zweite und dritte Reihe bezeichnet. Jeder Vorsprung 28 ist näherungsweise quaderförmig ausgebildet, seine längere Seite erstreckt sich parallel zur Längsachse des Durchführungselements 16. Die Vorsprünge 28 weisen schräge, sich nach außen verjüngende Seitenflächen auf. In dem dargestellten Ausführungsbeispiel besitzt das Durchführungselement 16 jeweils vier in Umfangsrichtung verteilt angeordnete Vorsprünge 28. Die Vorsprünge 28 der oberen Reihe befinden sich in diesem Ausführungsbeispiel an derselben Umfangsposition wie die Vorsprünge 28 der unteren Reihe. Es sind jedoch auch andere Ausführungsbeispiele denkbar, bei denen die Vorsprünge unterschiedlicher Reihen in Umfangsrichtung zueinander versetzt sind. Die Vorsprünge 28 führen das Durchführungselement 16 beim Einsetzen in die Getriebegehäuseöffnung 15 und bilden einen Presssitz. Auf diese Weise wird eine exakte Montage des Durchführungselements 16 erleichtert.

Die Vorsprünge 28 der zweiten und dritten Reihe sind in diesem Ausführungsbeispiel gegenüber den Vorsprüngen 33 der ersten Reihe in Umfangsrichtung versetzt. Allerdings sind auch Ausführungen denkbar, bei denen alle Vorsprünge an der gleichen Position in Umfangsrichtung angeordnet sind. Im montierten Zustand befindet sich das freie Ende des Durchführungselements 16 einschließlich der ersten Reihe der Vorsprünge 33 in der als Becherkupplung ausgebildeten Kupplung 20 des Fluidleitelements 17. Die Vorsprünge 33 bewirken eine Zentrierung des Durchführungselements 16 in der Kupplung 20 beim Einsetzen. Das freie Ende 21 des Durchführungselements 16 ist so lang, dass es formschlüssig in der Kupplung 20 des Fluidleitelements 17 gehalten ist.

Daneben umfasst das Durchführungselement 16 an seinem entgegengesetzten Ende eine Membran 30, die sich im montierten Zustand außerhalb des Getriebegehäuses 9 befindet. Am freien Ende des Durchführungselements 16 bzw. am freien Ende des Körpers 25 befindet sich eine gasdurchlässige Schutzkappe 31.

Zwei den Körper 25 koaxial umgebende O-Ringe 32 sind zwischen der zweiten und der dritten Reihe der Vorsprünge 28 angeordnet und dichten das Durchführungselement 16 gegenüber der Getriebegehäuseöffnung 15 ab.

Bei einem weiteren Ausführungsbeispiel kann das Durchführungselement 16 in die Gehäuseöffnung 15 geschraubt sein. Bei einem weiteren Ausführungsbeispiel sind das Durchführungselement 16 und der erste Steckverbinder 12 durch dieselbe Durchgangsöffnung des Getriebes geführt. Dazu kann ein Flanschabschnitt des ersten Steckverbinders entsprechend erweitert sein und vom Durchführungselement 16 durchsetzt werden.

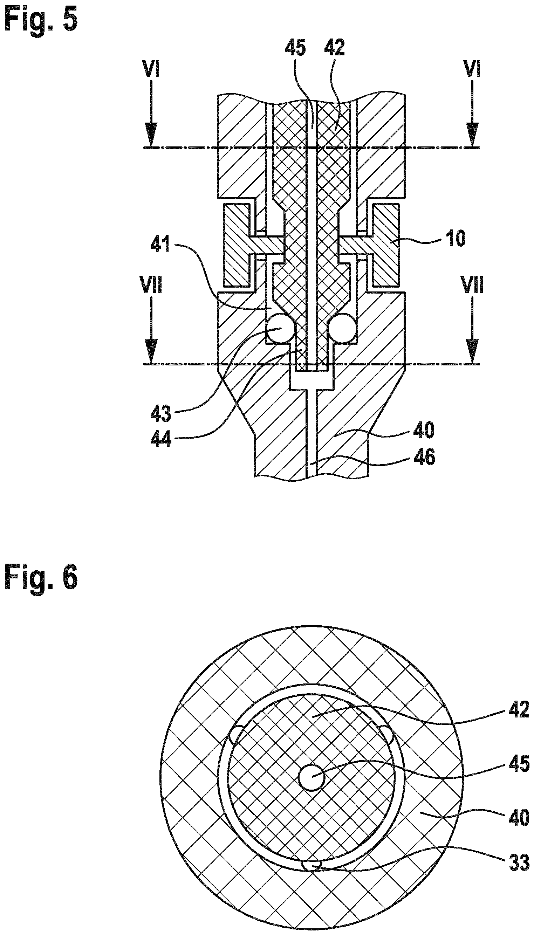

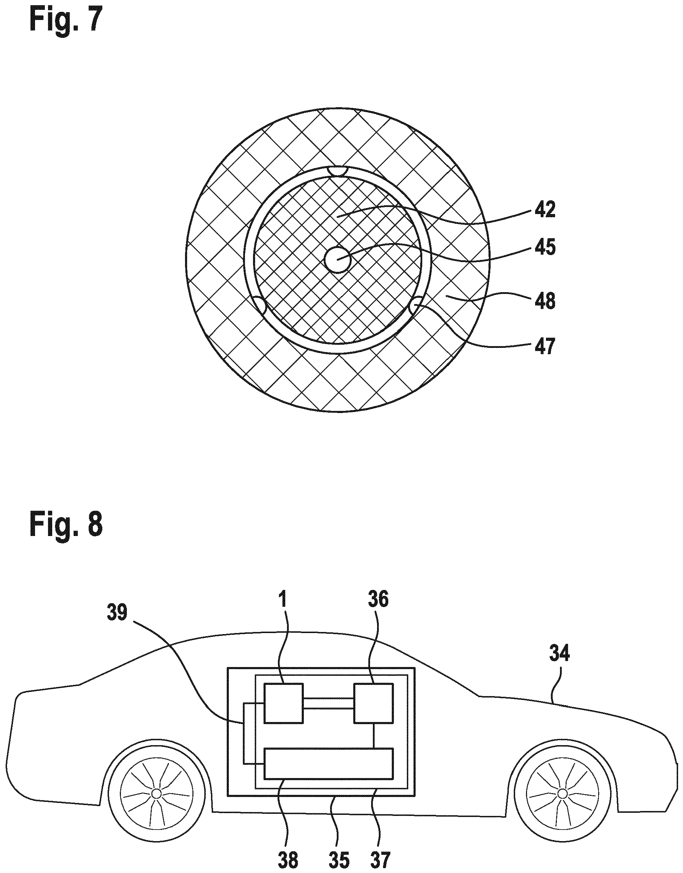

Die Fig. 5 bis 7 sind jeweils geschnittene Ansichten und zeigen ein Ausführungsbeispiel einer Kupplungsanordnung mit einem Durchführungselement 42 und einem Fluidleitelement 40. Fig. 5 zeigt einen Schnitt entlang der Längsrichtung, Fig. 6 zeigt einen Schnitt entlang der Linie VI-VI von Fig. 5 und Fig. 7 zeigt einen Schnitt entlang der Linie VII-VII von Fig. 5.

Das Fluidleitelement 40 und das Durchführungselement 42 sind in Fig. 5 schematisch und leicht vereinfacht dargestellt, insbesondere sind die drei Reihen der radial abstehenden Vorsprünge des Durchführungselements 42 in Fig. 5 nicht gezeigt.

Das Fluidleitelement 40 weist eine becherförmige Ausnehmung 41 auf, in die das Durchführungselement 42 eingesteckt ist. In Fig. 5 erkennt man, dass sich am Grund der Ausnehmung 41 ein O-Ring 43 befindet, der mit seiner Außenseite an dem Fluidleitelement 40 und mit seiner Innenseite an dem äußeren, freien Ende 44 des Durchführungselements 42 anliegt und somit den Zwischenraum abdichtet. Eine axiale Durchgangsöffnung 45 in dem Durchführungselement 42 bildet gemeinsam mit einer axialen Durchgangsöffnung 46 in dem Fluidleitelement 40 eine Fluidverbindung zwischen dem Äußeren und dem Inneren eines Gehäuses, sodass ein Druckausgleich erfolgen kann.

Die Kupplungsanordnung umfasst ein Befestigungselement, um das Durchführungselement 42 und das Fluidleitelement 40 miteinander zu verbinden, wobei das Befestigungselement einen verformbaren Clip 10 umfasst, der eine seitliche Öffnung der becherförmigen Ausnehmung 41 des Fluidleitelements 40 durchsetzt und in eine seitliche Ausnehmung des Durchführungselements 42 eingesetzt ist. Der Clip 10 verhindert ein Herausziehen des Durchführungselements 42 aus dem Fluidleitelement 40. Das Befestigungselement ist zum Ein-Ausclipsen verformbar und kann somit allein keine ausreichende Zentrierung des Durchführungselement 42 realisieren.

Die erste Reihe der Vorsprünge 33 ist in Axialrichtung, entlang der das Durchführungselement 42 in das Fluidleitelement 40 einsetzbar ist, vor dem Befestigungselement, d.h. oberhalb davon, angeordnet. Die an dem Innenumfang der becherförmigen Ausnehmung 41 verteilt angeordneten, radial nach innen weisenden Zentrierrippen 47 sind in der Axialrichtung, entlang der das Durchführungselement 42 in das Fluidleitelement 40 einsetzbar ist, hinter dem Befestigungselement an einem distalen Ende 48 der becherförmigen Ausnehmung 41 angeordnet.

Die Schnittebene der in Fig. 6 gezeigten Ansicht befindet sich im Bereich der Vorsprünge 33. Das Durchführungselement 42 weist dort die drei radial nach außen abstehenden Vorsprünge 33 auf, die an der Innenseite des Fluidleitelements 40 anliegen. Diese Vorsprünge 33 führen das Durchführungselement 42 beim Einsetzen in das Fluidleitelement 40 und zentrieren es.

Die Schnittebene der in Fig. 7 gezeigten Ansicht befindet sich im Bereich des unteren, freien Ende 44 des Durchführungselements 42 und in der Nähe des distalen Endes 48 der becherförmigen Ausnehmung 41 des Fluidleitelements 40. Man erkennt, dass das Fluidleitelement 40 dort an seinem Innenumfang die drei verteilt angeordneten, radial nach innen weisenden Zentrierrippen 47 aufweist, die an der Außenseite des freien Endes 44 des Durchführungselements 42 anliegen. Diese Zentrierrippen 47 begrenzen das vorhandene Spiel zwischen dem Durchführungselement 42 und dem Fluidleitelement 40. Da das Durchführungselement 42 an seinem unteren, freien Ende 44 durch die Zentrierrippen 47 abgestützt ist, wird ein Verkippen verhindert.

Fig. 8 ist eine Prinzipskizze eines Fahrzeugs 34 mit einer Antriebseinrichtung 35.

Die zum Antreiben des Fahrzeugs 34 eingerichtete Antriebseinrichtung 35 umfasst eine elektrische Maschine 36, die Getriebeeinrichtung 1 sowie eine Welle, welche zur Übertragung eines Drehmoments der elektrischen Maschine 36 auf die Getriebeeinrichtung 1 eingerichtet ist. Das Getriebegehäuse 9 ist dabei als Teil eines die elektrische Maschine 36, die Welle und die Getriebeeinrichtung 1 aufnehmenden Gehäuses 37.

Außerdem weist die Antriebseinrichtung 35 einen Inverter 38 auf, der dazu eingerichtet ist, eine Gleichspannung in eine die elektrische Maschine 36 versorgende Wechselspannung zu wandeln. Der Inverter 38 ist mittels eines Kabels 39 an den ersten Steckverbinder 12 der Anschlussvorrichtung (siehe Fig. 1) angeschlossen, um den Parksperrenaktuator 8 elektrisch zu versorgen und anzusteuern.

### Bezugszeichenliste

- 1: Getriebeeinrichtung
- 2: Getriebeelement
- 3: Getriebeelement
- 4: Lager
- 5: Parksperrenrad
- 6: Parksperre
- 7: Parksperrenklinke
- 8: Parksperrenaktuator
- 9: Getriebegehäuse
- 10: Clip
- 11: Kabelanordnung
- 12: Steckverbinder
- 13: Steckverbinder
- 14: Druckausgleichsvorrichtung
- 15: Getriebegehäuseöffnung
- 16: Durchführungselement
- 17: Fluidleitelement
- 18: Kupplung
- 19: Parksperrenaktuatorgehäuse
- 20: Kupplung
- 21: Ende
- 22: Rastkragen
- 23: Befestigungsmittel
- 24: Befestigungsmittel
- 25: Körper
- 26: Längsachse
- 27: Freiraum
- 28: Vorsprung
- 29: Kragen
- 30: Membran
- 31: Schutzkappe
- 32: O-Ring
- 33: Vorsprung
- 34: Fahrzeug
- 35: Antriebseinrichtung
- 36: elektrische Maschine
- 37: Gehäuse
- 38: Inverter
- 39: Kabel
- 40: Fluidleitelement
- 41: Ausnehmung
- 42: Durchführungselement
- 43: O-Ring
- 44: freies Ende
- 45: Durchgangsöffnung
- 46: Durchgangsöffnung
- 47: Zentrierrippen
- 48: distales Ende

## Patentansprüche

1. Kupplungsanordnung, umfassend:
- ein Durchführungselement (16, 42), das zum Bilden einer Fluidverbindung zwischen dem Äußeren und dem Inneren eines Gehäuses in eine Öffnung des Gehäuses einsetzbar ist,
- ein Fluidleitelement (17, 40) mit einer becherförmigen Ausnehmung (41), in die das Durchführungselement (16, 42) einsteckbar ist,
wobei das Durchführungselement (16, 42) in der Nähe seines zum Fluidleitelement (17, 40) weisenden Endes zum Zentrieren des Durchführungselements (16, 42) in dem Fluidleitelement (17, 40) eine erste Reihe von in Umfangsrichtung verteilt angeordneten, radial abstehenden Vorsprüngen (33) aufweist,
wobei die becherförmigen Ausnehmung (41) des Fluidelements (17, 40) an ihrem Innenfumfang verteilt andeordnete, radial nach innen weisende Zentrierrippen aufweist,
- ein Befestigungselement zum Verbinden des Durchführungselements (16, 42) und des Fluidleitelements (17, 40) miteinander, wobei das Befestigungselement einen verformbaren Clip (10) umfasst, der eine Öffnung der becherförmigen Ausnehmung (41) durchsetzt und in eine Ausnehmung des Durchführungselements (16, 42) einsetzbar ist,
wobei die erste Reihe der Vorsprünge (33) in Axialrichtung, entlang der das Durchführungselement (16, 42) in das Fluidleitelement (17, 40) einsetzbar ist, vor dem Befestigungselement angeordnet ist, und dass die Zentrierrippen (47) in der Axialrichtung, entlang der das Durchführungselement (16, 42) in das Fluidleitelement (17, 40) einsetzbar ist, hinter dem Befestigungselement angeordnet sind.

2. Kupplungsanordnung nach Anspruch 1, wobei die Zentrierrippen (47) an einem distalen Ende (48) der becherförmigen Ausnehmung (41) angeordnet sind.

3. Kupplungsanordnung nach einem der vorangehenden Ansprüche, wobei die erste Reihe der Vorsprünge (33) des Durchführungselements (16, 42) drei in Umfangsrichtung verteilt angeordnete Vorsprünge (33) aufweist.

4. Kupplungsanordnung nach einem der vorangehenden Ansprüche, wobei das Durchführungselement (16, 42) zwei weitere axial beabstandete Reihen von in Umfangsrichtung verteilt angeordneten, radial abstehenden Vorsprüngen (28) zum Zentrieren des Durchführungselements (16, 42) in der Öffnung des Gehäuses aufweist.

5. Kupplungsanordnung nach Anspruch 4, wobei die zweite und die dritte Reihe der Vorsprünge (28) jeweils vier in Umfangsrichtung verteilt angeordnete Vorsprünge (28) aufweisen.

6. Kupplungsanordnung nach Anspruch 4 oder 5, wobei axial vor und hinter den beiden Reihen der Vorsprünge (28) jeweils ein O-Ring (32) angeordnet ist.

7. Kupplungsanordnung nach einem der Ansprüche 4 bis 6, wobei sich die Vorsprünge (28, 33) der ersten und/oder zweiten und/oder dritten Reihe in Axialrichtung des Durchführungselements (16, 42) erstrecken und im Wesentlichen quaderförmig ausgebildet sind.

8. Kupplungsanordnung nach einem der vorangehenden Ansprüche, wobei die Vorsprünge (28, 33) der ersten und/oder der zweiten und/oder der dritten Reihe schräge, sich radial nach außen verjüngende Seitenflächen aufweisen.

9. Getriebeeinrichtung (1) für ein elektrisch antreibbares Fahrzeug, umfassend:
- ein Parksperrenrad (5),
- eine Parksperre (6) mit einem Parksperrenaktuator (8) zum Blockieren des Parksperrenrads (5),
- ein Getriebegehäuse (9), in dem das Parksperrenrad (5) und die Parksperre (6) aufgenommen sind,
- eine Druckausgleichsvorrichtung (14), durch die das Innere des Parksperrenaktuators (8) mit dem Äußeren des Getriebegehäuses (9) fluidverbunden ist, wobei die Druckausgleichsvorrichtung (14) eine Kupplungsanordnung nach einem der Ansprüche 1 bis 8 aufweist, deren Durchführungselement (16, 42) das Getriebegehäuse (9) durchsetzt und deren Fluidleitelement (17, 40) mit dem Inneren des Parksperrenaktuators (8) verbunden ist.

## Claims

1. Coupling assembly, comprising:
- a leadthrough element (16, 42) which, in order to form a fluid connection between the exterior and the interior of a housing, is insertable into an opening in the housing,
- a fluid-guiding element (17, 40) with a cup-shaped recess (41) into which the leadthrough element (16, 42) can be plugged,
wherein the leadthrough element (16, 42) has, in the vicinity of its end facing the fluid-guiding element (17, 40), a first row of radially protruding projections (33) distributed in the circumferential direction, for centring the leadthrough element (16, 42) in the fluid-guiding element (17, 40),
wherein the cup-shaped recess (41) of the fluid element (17, 40) has radially inwardly facing centring ribs distributed on its inner circumference,
- a fastening element for connecting the leadthrough element (16, 42) and the fluid-guiding element (17, 40) to each other, wherein the fastening element comprises a deformable clip (10), which penetrates an opening in the cup-shaped recess (41) and is insertable into a recess of the leadthrough element (16, 42),
wherein the first row of projections (33) is arranged in front of the fastening element in the axial direction, along which the leadthrough element (16, 42) is insertable into the fluid-guiding element (17, 40), and the centring ribs (47) are arranged behind the fastening element in the axial direction, along which the leadthrough element (16, 42) is insertable into the fluid-guiding element (17, 40).

2. Coupling assembly according to Claim 1, wherein the centring ribs (47) are arranged at a distal end (48) of the cup-shaped recess (41).

3. Coupling assembly according to either of the preceding claims, wherein the first row of projections (33) of the leadthrough element (16, 42) has three projections (33) distributed in the circumferential direction.

4. Coupling assembly according to any one of the preceding claims, wherein the leadthrough element (16, 42) has two further axially spaced rows of radially protruding projections (28) distributed in the circumferential direction for centring the leadthrough element (16, 42) in the opening in the housing.

5. Coupling assembly according to Claim 4, wherein the second and the third row of projections (28) each have four projections (28) distributed in the circumferential direction.

6. Coupling assembly according to Claim 4 or 5, wherein an O-ring (32) is in each case arranged axially in front of and behind the two rows of projections (28).

7. Coupling assembly according to any one of Claims 4 to 6, wherein the projections (28, 33) of the first and/or second and/or third row extend in the axial direction of the leadthrough element (16, 42) and are substantially rectangular.

8. Coupling assembly according to any one of the preceding claims, wherein the projections (28, 33) of the first and/or the second and/or the third row have inclined side surfaces tapering radially outwards.

9. Transmission device (1) for an electrically drivable vehicle, comprising:
- a parking lock wheel (5),
- a parking lock (6) with a parking lock actuator (8) for blocking the parking lock wheel (5),
- a transmission housing (9) in which the parking lock wheel (5) and the parking lock (6) are accommodated,
- a pressure compensation device (14) by which the interior of the parking lock actuator (8) is fluidically connected to the exterior of the transmission housing (9), wherein the pressure compensation device (14) has a coupling assembly according to any one of Claims 1 to 8, the leadthrough element (16, 42) of which penetrates the transmission housing (9) and the fluid-guiding element (17, 40) of which is connected to the interior of the parking lock actuator (8).

## Revendications

1. Agencement d'accouplement, comprenant :
- un élément de traversée (16, 42) pouvant être inséré dans une ouverture d'un boîtier pour former une communication fluidique entre l'extérieur et l'intérieur du boîtier,
- un élément de guidage de fluide (17, 40) avec un évidement en forme de godet (41) dans lequel l'élément de traversée (16, 42) peut être inséré,
l'élément de traversée (16, 42) présentant, à proximité de son extrémité orientée vers l'élément de guidage de fluide (17, 40), pour le centrage de l'élément de traversée (16, 42) dans l'élément de guidage de fluide (17, 40), une première rangée de saillies (33) dépassant radialement, agencées en étant réparties dans la direction périphérique,
l'évidement en forme de godet (41) de l'élément de fluide (17, 40) présentant des nervures de centrage agencées en étant réparties sur sa périphérie intérieure, orientées radialement vers l'intérieur,
- un élément de fixation pour relier l'élément de traversée (16, 42) et l'élément de guidage de fluide (17, 40) l'un à l'autre, l'élément de fixation comprenant un clip déformable (10) qui traverse une ouverture de l'évidement en forme de godet (41) et peut être inséré dans un évidement de l'élément de traversée (16, 42),
la première rangée de saillies (33) étant agencée avant l'élément de fixation dans la direction axiale selon laquelle l'élément de traversée (16, 42) peut être inséré dans l'élément de guidage de fluide (17, 40), et les nervures de centrage (47) étant agencées après l'élément de fixation dans la direction axiale selon laquelle l'élément de traversée (16, 42) peut être inséré dans l'élément de guidage de fluide (17, 40).

2. Agencement d'accouplement selon la revendication 1, les nervures de centrage (47) étant agencées à une extrémité distale (48) de l'évidement en forme de godet (41).

3. Agencement d'accouplement selon l'une quelconque des revendications précédentes, la première rangée de saillies (33) de l'élément de traversée (16, 42) présentant trois saillies (33) agencées en étant réparties dans la direction périphérique.

4. Agencement d'accouplement selon l'une quelconque des revendications précédentes, l'élément de traversée (16, 42) présentant deux autres rangées espacées axialement de saillies (28) dépassant radialement, agencées en étant réparties dans la direction périphérique, pour centrer l'élément de traversée (16, 42) dans l'ouverture du boîtier.

5. Agencement d'accouplement selon la revendication 4, les deuxième et troisième rangées de saillies (28) présentant chacune quatre saillies (28) agencées en étant réparties dans la direction périphérique.

6. Agencement d'accouplement selon la revendication 4 ou 5, un joint torique (32) étant agencement axialement avant et après chacune des deux rangées de saillies (28).

7. Agencement d'accouplement selon l'une quelconque des revendications 4 à 6, les saillies (28, 33) de la première et/ou de la deuxième et/ou de la troisième rangée s'étendant dans la direction axiale de l'élément de traversée (16, 42) et étant réalisées sous forme essentiellement parallélépipédique.

8. Agencement d'accouplement selon l'une quelconque des revendications précédentes, les saillies (28, 33) de la première et/ou de la deuxième et/ou de la troisième rangée présentant des surfaces latérales inclinées se rétrécissant radialement vers l'extérieur.

9. Dispositif de transmission (1) pour un véhicule à propulsion électrique, comprenant :
- une roue de verrouillage de stationnement (5),
- un verrou de stationnement (6) avec un actionneur de verrouillage de stationnement (8) pour bloquer la roue de verrouillage de stationnement (5),
- un boîtier de transmission (9) dans lequel sont reçus la roue de verrouillage de stationnement (5) et le verrou de stationnement (6),
- un dispositif d'équilibrage de pression (14) par lequel l'intérieur de l'actionneur de verrouillage de stationnement (8) est en communication fluidique avec l'extérieur du boîtier de transmission (9), le dispositif d'équilibrage de pression (14) présentant un agencement d'accouplement selon l'une quelconque des revendications 1 à 8, dont l'élément de traversée (16, 42) traverse le boîtier de transmission (9) et dont l'élément de guidage de fluide (17, 40) est relié à l'intérieur de l'actionneur de verrouillage de stationnement (8).
